# EUROPÄISCHE PATENTANMELDUNG

(11) **EP 1 983 354 A1**
(43) Veröffentlichungstag der Anmeldung: **22.10.2008**
(21) Anmeldenummer: 07008126.0
(22) Anmeldetag: 20.04.2007
(51) Int. Cl.: G01S 7/481, G01S 17/89

(54) **Optoelektronischer Scanner**

(71) Anmelder: IBEO Automobile Sensor GmbH, 22179 Hamburg (DE)
(72) Erfinder: Schulz, Roland, 22359 Hamburg (DE)
(74) Vertreter: Manitz, Finsterwald & Partner GbR

(57) **Zusammenfassung**

Die Erfindung betrifft eine optoelektronische Erfassungseinrichtung, insbesondere einen Laserscanner, mit wenigstens einem Sender, der in einem Sendekanal bevorzugt gepulste elektromagnetische Strahlung in einen Überwachungsbereich aussendet, und zumindest einem dem Sender zugeordneten Empfänger, der aus dem Überwachungsbereich in einem Empfangskanal reflektierte Strahlung nachweist, wobei wenigstens ein Hilfssender vorgesehen ist, der anstelle des Senders betreibbar ist und Strahlung in einem Hilfssendekanal aussendet, welcher zumindest in einem Teilbereich des Nahbereichs des Überwachungsbereiches den Empfangskanal schneidet, wobei der Sender, der Empfänger und der Hilfssender in vorgegebenen Positionen relativ zu einer gedachten oder realen Abschlussfläche angeordnet sind, die einen den Sender, den Empfänger und den Hilfssender enthaltenden Einbauraum von dem Überwachungsbereich trennt, und wobei der Hilfssender gegenüber dem Empfänger derart optisch isoliert ist, dass von dem Hilfssender ausgesandte und von der Abschlussfläche reflektierte Strahlung nicht auf den Empfänger gelangt.

## Beschreibung

Die Erfindung betrifft eine optoelektronische Erfassungseinrichtung, insbesondere einen Laserscanner, mit wenigstens einem Sender, der in einem Sendekanal bevorzugt gepulste elektromagnetische Strahlung in einen Überwachungsbereich aussendet, und zumindest einem dem Sender zugeordneten Empfänger, der aus dem Überwachungsbereich in einem Empfangskanal reflektierte Strahlung nachweist.

Derartige Erfassungseinrichtungen sind grundsätzlich bekannt und werden beispielsweise an Fahrzeugen angebracht, um während der Fahrt die insbesondere in Fahrtrichtung vor dem Fahrzeug gelegene Umgebung zu überwachen. Die Reichweite einer derartigen Erfassungseinrichtung kann je nach Auslegung beträchtlich sein und beispielsweise 100 m und mehr betragen. Eine besondere Bedeutung kommt dem so genannten Nahbereich zu, da Objekte, die sich in der Nähe des Fahrzeuges befinden, durch das Fahrzeug unmittelbar gefährdet sein bzw. eine unmittelbare Gefahr für das Fahrzeug darstellen können. Welche maximale Entfernung von dem Nahbereich noch umfasst ist, hängt von der jeweiligen Anwendung ab. Bei Fahrzeuganwendungen spricht man von dem "Nahbereich" in Verbindung mit Entfernungen von einigen Metern.

Ein Grundproblem, mit dem man sich im praktischen Einsatz derartiger Erfassungseinrichtungen konfrontiert sehen kann, besteht in unerwünschten Reflexionen der von dem Sender ausgesandten Strahlung, die nicht von den eigentlich interessierenden Objekten im Überwachungsbereich stammen. Eine Ursache für derartige Reflexionen können Umweltbedingungen wie Regen, Schnee und Nebel sein. Eine andere potentielle Quelle für störende Reflexionen sind für die verwendete Strahlung durchlässige Flächen insbesondere in Form so genannter Abschluss- oder Abdeckscheiben, die dazu dienen, die Erfassungseinrichtung vor äußeren Einflüssen zu schützen. Eine derartige Abschlussscheibe kann ein Bestandteil der Erfassungseinrichtung selbst oder am Einbauort vorhanden sein. An einem Fahrzeug kann die Abschlussscheibe beispielsweise von einem die äußere Kontur des Fahrzeugs bestimmenden, für die verwendete Strahlung durchlässigen Bauteil, z.B. einer Verkleidung, Abdeckung oder Blende, gebildet werden, hinter welcher die Erfassungseinrichtung am Fahrzeug angebracht ist. Verschmutzungen der Abschlussscheibe können den Anteil der nicht in den Überwachungsbereich gelangenden, sondern von der Abschlussscheibe zurück in den Einbauraum reflektierten Strahlung so weit erhöhen, dass der Empfänger im Nahbereich "blind" wird, d.h. auf Grund der rückgestreuten Strahlungsanteile im Nahbereich derart hohe Signale empfängt, dass von "echten" Objekten, die sich im Nahbereich vor der Erfassungseinrichtung befinden, reflektierte Strahlung nicht mehr nachgewiesen werden kann. Verschmutzungen der Abschlussscheibe können also dazu führen, dass die Erfassungseinrichtung zumindest im Nahbereich nicht mehr messfähig ist.

Auf Grund der vorstehend erwähnten besonderen Bedeutung des Nahbereiches sind daher Maßnahmen wünschenswert, die den Erhalt der Messfähigkeit der Erfassungseinrichtung im Nahbereich sicherstellen. Eine bekannte Möglichkeit besteht darin, für eine rechtzeitige Reinigung der Abschlussscheibe zu sorgen. Dies ist jedoch mit einem nicht unerheblichen konstruktiven Aufwand verbunden. Außerdem ist zu berücksichtigen, dass insbesondere an Fahrzeugen der für Zusatzkomponenten zur Verfügung stehende Bauraum begrenzt ist und somit eine Reinigungseinrichtung für die Abschlussscheibe wertvollen zusätzlichen Bauraum kosten würde.

Aufgabe der Erfindung ist es, eine Erfassungseinrichtung der eingangs genannten Art derart weiterzubilden, dass auf einfache und zuverlässige Wiese die Messfähigkeit im Nahbereich sichergestellt werden kann, und zwar unter allen in der Praxis auftretenden Bedingungen und insbesondere auch bei Verschmutzungen einer der Erfassungseinrichtung zugeordneten Abschlussscheibe.

Die Lösung dieser Aufgabe erfolgt erfindungsgemäß durch die Merkmale des Anspruchs 1.

Erfindungsgemäß ist wenigstens ein Hilfssender vorgesehen, der Strahlung in einem Hilfssendekanal aussendet, welcher zumindest in einem Teilbereich des Nahbereichs des Überwachungsbereiches den Empfangskanal schneidet, wobei der Sender, der Empfänger und der Hilfssender in vorgegebenen Positionen relativ zu einer gedachten oder realen Abschlussfläche angeordnet sind, die einen den Sender, den Empfänger und den Hilfssender enthaltenden Einbauraum von dem Überwachungsbereich trennt, und wobei der Hilfssender gegenüber dem Empfänger derart optisch isoliert ist, dass von dem Hilfssender ausgesandte und von der Abschlussfläche reflektierte Strahlung nicht auf den Empfänger gelangt.

Bei einer Verschmutzung der - hier allgemein so bezeichneten - Abschlussfläche kann der Hilfssender den eigentlichen Sender ersetzen und die Aussendung der Strahlung in den Überwachungsbereich übernehmen. Dabei lässt sich der Hilfssender derart auslegen und anordnen, dass er gegenüber dem Empfänger optisch isoliert ist, so dass die von dem Hilfssender ausgesandte und von der Abschlussfläche reflektierte Strahlung nicht auf den Empfänger gelangt. In diesem Betriebsmodus der erfindungsgemäßen Erfassungseinrichtung kann der eigentliche Sender abgeschaltet werden, so dass auch über den eigentlichen Sendekanal keine störenden Reflexionen entstehen können.

Ein Vorteil des erfindungsgemäßen Hilfslaser-Konzeptes besteht darin, dass keine Maßnahmen getroffen werden müssen, um den eigentlichen Sender bzw. dessen Sendekanal von dem Empfänger bzw. dem Empfangskanal optisch zu isolieren. Die Sender/Empfänger-Anordnung kann somit ohne Rücksicht auf eine möglicherweise auftretende Verschmutzungssituation für einen Normalbetrieb unter optimalen Bedingungen ausgelegt werden.

Durch die Formulierung "gedachte oder reale Abschlussfläche" wird zum Ausdruck gebracht, dass eine gegenständliche Einrichtung wie insbesondere eine Abschluss- oder Abdeckscheibe, die im tatsächlichen Betrieb der Erfassungseinrichtung die Abschlussfläche definiert, nicht zwingend ein Bestandteil der Erfassungseinrichtung sein muss. In einem solchen Fall können der Sender, der Empfänger und der Hilfssender der Erfassungseinrichtung in einer relativen Anordnung vormontiert sein, in der sie Positionen relativ zu einer gedachten Fläche einnehmen, an deren Stelle sich im montierten Zustand der Erfassungseinrichtung eine beispielsweise zu einem betreffenden Fahrzeug gehörende Abschlussscheibe oder Abdeckung befindet.

Es ist auch möglich, dass der Hilfssender erst bei der Montage der Erfassungseinrichtung in seiner bestimmungsgemäßen Position relativ zu der Sender/ Empfänger-Anordnung und zu der dann vorhandenen realen Abschluss montiert wird.

Bei der erfindungsgemäßen Erfassungseinrichtung handelt es sich insbesondere um eine Einrichtung zur Entfernungsmessung, die Strahlungspulse aussendet und die Entfernungen zu im Überwachungsbereich befindlichen Objekten, an denen die Strahlungspulse reflektiert werden, durch die Laufzeit der Strahlungspulse bestimmt, die diese benötigen, um sich vom Sender zum Objekt und vom Objekt zurück zum Empfänger der Erfassungseinrichtung auszubreiten. Bei diesem Prinzip der Entfernungsbestimmung durch Lichtlaufzeitmessung kann zwischen dem Nahbereich und dem Nicht-Nahbereich auf Grund der gemessenen Laufzeit unterschieden werden. Eine abnehmende Empfindlichkeit gegenüber realen Objekten im Nahbereich als Folge starker Reflexionen von der Abschlussscheibe ist ein Indiz für eine relevante Verschmutzung der Abschlussscheibe. Es lassen sich somit Kriterien entwickeln, an Hand welcher durch Auswerten der Signalhöhe und der Laufzeit eine Entscheidung dahingehend getroffen werden kann, wann der Hilfssender zu aktivieren ist.

Des Weiteren kann es sich bei der erfindungsgemäßen Erfassungseinrichtung sowohl um ein starres als auch um ein scannendes System handeln. Bei einem starren System wird die Strahlung in eine einzige Richtung - genauer: in einen einzigen Raumwinkelbereich (auf Grund der Divergenz der Strahlung) - ausgesandt. Ist die Erfassungseinrichtung als Scanner ausgebildet, so wird die Strahlung in wenigstens einer Abtastebene innerhalb eines Abtastwinkelbereiches nacheinander in unterschiedliche Abtastrichtungen - genauer: in unterschiedliche Abtastraumwinkelbereiche - in den Überwachungsbereich ausgesandt.

Bei Ausbildung als Scanner kann eine relativ zu dem Sender und dem Empfänger rotierende Ablenkeinrichtung vorgesehen sein, die für jede Abtastrichtung die von dem Sender ausgesandte Strahlung in den Überwachungsbereich und die aus dem Überwachungsbereich reflektierte Strahlung auf den Empfänger lenkt. Scannende Erfassungseinrichtungen, insbesondere Laserscanner, sind in vielfältigen Ausgestaltungen hinlänglich bekannt, so dass auf deren Aufbau und Funktionsweise hier nicht näher eingegangen zu werden braucht.

Die Lösung der der Erfindung zu Grunde liegenden Aufgabe erfolgt außerdem durch ein Verfahren zum Betreiben einer optoelektronischen Erfassungseinrichtung, insbesondere eines Laserscanners, die wenigstens einen Sender, der in einem Sendekanal bevorzugt gepulste elektromagnetische Strahlung in einen Überwachungsbereich aussendet, zumindest einem dem Sender zugeordneten Empfänger, der aus dem Überwachungsbereich in einem Empfangskanal reflektierte Strahlung nachweist, und wenigstens einen Hilfssender umfasst, der Strahlung in einem Hilfssendekanal aussendet, welcher zumindest in einem Teilbereich des Nahbereichs des Überwachungsbereiches den Empfangskanal schneidet, wobei der Sender, der Empfänger und der Hilfssender in vorgegebenen Positionen relativ zu einer für die Strahlung durchlässigen Abschlussscheibe angeordnet werden, die einen den Sender, den Empfänger und den Hilfssender enthaltenden Einbauraum von dem Überwachungsbereich trennt, wobei der Hilfssender gegenüber dem Empfänger derart optisch isoliert wird, dass von dem Hilfssender ausgesandte und von der Abschlussscheibe reflektierte Strahlung nicht auf den Empfänger gelangt, und wobei der Hilfssender aktiviert wird, wenn die Rückstreuung der von dem Sender ausgesandten Strahlung von der Abschlussscheibe auf den Empfänger ein vorgegebenes Maß übersteigt.

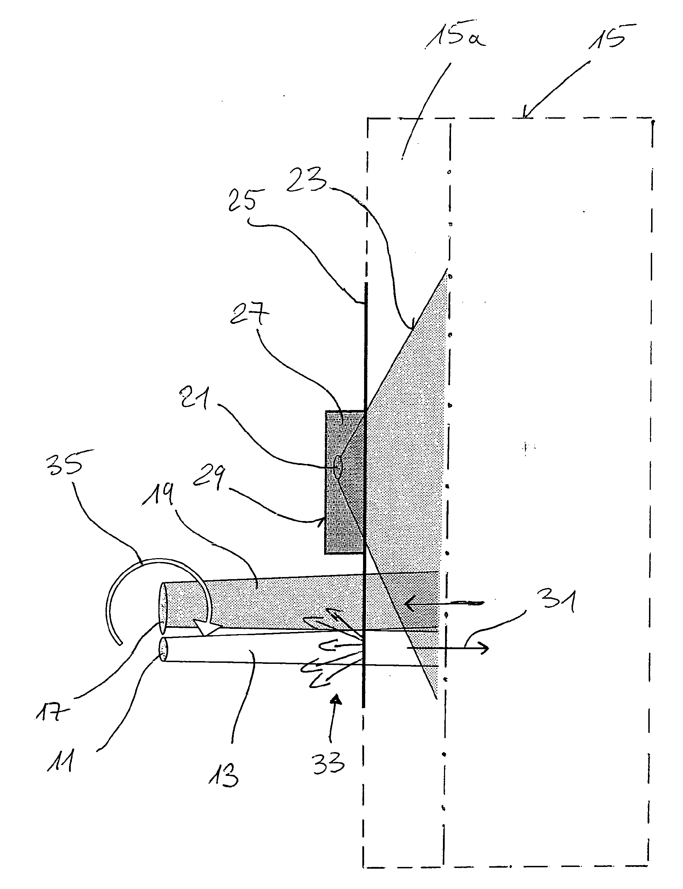

Bevorzugte Ausführungsformen der Erfindung sind auch in den abhängigen Ansprüchen, der Beschreibung sowie der Zeichnung angegeben.

In einer Ausführungsform ist der Hilfssender in einem Raum angeordnet, der zum einen von der Abschlussfläche und zum anderen von einer für die Strahlung undurchlässigen Wand begrenzt ist. Insbesondere ist der Raum von einem für die Strahlung undurchlässigen Schacht oder Gehäuse gebildet, der bzw. das mit einer für die Strahlung durchlässigen, insbesondere offenen, Seite der Abschlussfläche zugewandt und insbesondere auf die Abschlussfläche aufgesetzt ist.

Hierdurch lässt sich auf einfache und wirkungsvolle Weise eine optische Trennung des Hilfssenders von dem Empfänger bzw. dem Empfangskanal erreichen.

In einem weiteren Ausführungsbeispiel der Erfindung ist die Erfassungseinrichtung als Scanner ausgebildet, wobei der Hilfssender ein nicht-scannendes System ist. Dabei ist der Hilfssender derart ausgebildet, dass er den gesamten Abtastwinkelbereich des Scanners abdeckt. Da der Hilfssender lediglich dazu vorgesehen ist, den Nahbereich auszuleuchten, ist trotz der Anforderung, den gesamten Abtastwinkelbereich abzudecken, nur eine relativ niedrige Sendeleistung erforderlich.

Die Abdeckung des gesamten Abtastwinkelbereiches durch einen als starres, nicht-scannendes System ausgebildeten Hilfssender kann beispielsweise durch eine speziell ausgebildete Laserdiode des Hilfssenders und/oder durch eine spezielle Sendeoptik des Hilfssenders erreicht werden.

Insbesondere kann der Hilfssender als Strichlaser ausgebildet sein.

Gemäß einer weiteren Ausführungsform der Erfindung ist eine Steuereinrichtung vorgesehen, die dazu ausgebildet ist, einen Zustand zu detektieren, in welchem die Rückstreuung der von dem Sender ausgesandten Strahlung von der Abschlussfläche auf den Empfänger ein vorgegebenes Maß übersteigt, und bei Detektion eines derartigen Zustands den Hilfssender zu aktivieren.

Zur Detektion eines hinsichtlich der Rückstreuung kritischen Zustandes kann z.B. der Empfänger selbst ausgewertet werden, wie es vorstehend bereits erwähnt wurde. Alternativ oder zusätzlich kann wenigstens ein zusätzlicher Sensor innerhalb des Einbauraumes vorgesehen sein, um den Anteil der von der Abschlussfläche reflektierten Strahlung zu messen. Jede Möglichkeit, den Verschmutzungsgrad einer Abschlussscheibe und/oder das Maß der Rückstreuung von der Abschlussscheibe zu bestimmen, kommt grundsätzlich für die erfindungsgemäße Erfassungseinrichtung bzw. deren Betrieb in Frage.

Wie vorstehend bereits erwähnt, ist in einer Ausführungsform der Erfindung vorgesehen, dass der Sender deaktiviert wird, wenn der Hilfssender aktiviert wird. Grundsätzlich ist es alternativ auch möglich, den Sender nicht zu deaktivieren und den Hilfssender zeitversetzt zum Sender zu betreiben, beispielsweise derart, dass der Hilfssender Strahlungspulse jeweils in den Pausen zwischen zwei aufeinander folgenden Strahlungspulsen des Senders emittiert, wobei der Empfänger zeitlich synchronisiert mit dem Hilfssender betrieben wird, so dass von dem eigentlichen Sender ausgesandte und von der Abschlussfläche reflektierte Strahlung allenfalls dann auf den Empfänger trifft, wenn dieser gerade nicht aktiv ist bzw. gerade nicht ausgelesen wird.

Die Erfindung wird im Folgenden beispielhaft unter Bezugnahme auf die Zeichnung beschrieben, deren einzige Figur schematisch eine Ausführungform einer erfindungsgemäßen Erfassungseinrichtung und deren Funktionsprinzip zeigt.

Die Figur zeigt eine erfindungsgemäße Erfassungseinrichtung in einer schematischen Ansicht in einer mit der Zeichenebene übereinstimmenden Abtastebene, in welcher die Abtastung eines Überwachungsbereiches 15 durch die als Laserscanner ausgebildete Erfassungseinrichtung erfolgt.

Die Erfassungseinrichtung umfasst einen Sender 11 und einen Empfänger 17, von denen in der Figur lediglich eine Sendeoptik bzw. eine Empfangsoptik angedeutet sind. Der Sender 11 umfasst eine gepulst oder auf andere Art und Weise moduliert betreibbare Laserdiode, die elektromagnetische Strahlung im Infrarot-Bereich emittiert. Der Empfänger 17 umfasst eine Fotodiode oder ein Fotodioden-Array, die bzw. das zum Nachweis von elektromagnetischer Strahlung im Infrarot-Bereich ausgebildet ist.

Die durch die Sendeoptik geformte Strahlung des Senders 11 wird in Form eines eine bestimmte Divergenz aufweisenden Sendestrahls ausgesandt, der einen Sendekanal 13 definiert. Entsprechend ist durch die Empfangsoptik des Empfängers 17 ein Empfangskanal 19 definiert. Sich in dem Empfangskanal 19 ausbreitende und auf die Empfangsdiode bzw. das Empfangsdioden-Array fallende Strahlung wird von dem Empfänger 17 nachgewiesen. Der erfindungsgemäße Laserscanner erfasst folglich solche Objekte, die sich an einem Ort befinden, an welchem sich der Sendekanal 13 und der Empfangskanal 19 wenigstens teilweise überlappen oder schneiden.

Der Figur ist zu entnehmen, dass sich in dem dargestellten Ausführungsbeispiel der Sendekanal 13 und der Empfangskanal 19 bereits im Bereich einer nachstehend näher erläuterten Abschluss- oder Abdeckscheibe 25 überlappen, die - von der Sender/Empfänger-Anordnung 11, 17 aus gesehen - den Beginn des Überwachungsbereiches 15 festlegt, der von der Erfassungseinrichtung auf das Vorhandensein von Objekten überprüft werden soll. Damit die Erfassungseinrichtung auch in einem sich unmittelbar an die Abschlussscheibe 25 anschließenden Nahbereich 15a messfähig ist, ist die vorstehend erläuterte Überlappung bzw. Überschneidung zwischen Sendekanal 13 und Empfangskanal 19 unmittelbar im Anschluss an die Abschlussscheibe 25 vorgesehen.

Im Bereich der Abschlussscheibe 25 ist somit keine optische Trennung zwischen Sendekanal 13 und Empfangskanal 19 vorhanden. Dies hat zur Folge, dass an der Innenseite der Abschlussscheibe 25 rückgestreute Strahlung 33 auf den Empfänger 17 gelangen kann und von diesem nachgewiesen wird. Die Messfähigkeit der Erfassungseinrichtung im Nahbereich 15a ist hierdurch beeinträchtigt oder nicht mehr gegeben.

Wie erwähnt, handelt es sich bei der hier angegebenen Erfassungseinrichtung um ein scannendes System. Die Figur zeigt eine Momentaufnahme, in welcher der Scanner innerhalb der in der Zeichenebene der Figur liegenden Abtastebene in eine einzige Senderichtung 31 "blickt". Durch einen Pfeil ist in der Figur der Abtast- oder Scan-Drehsinn 35 des Laserscanners angedeutet. Eine während des Betriebs bezüglich der stationären Sender/Empfänger-Anordnung 11, 17 rotierende Ablenkeinrichtung (nicht dargestellt) z.B. in Form eines ebenen Spiegels lenkt die nacheinander mit einer Frequenz von beispielsweise einigen kHz ausgesandten Strahlungspulse in der Abtastebene innerhalb eines Abtastwinkelbereiches, der bis zu 360° betragen kann, nacheinander in unterschiedliche Abtastrichtungen 31. Von innerhalb der Reichweite des Scanners im Überwachungsbereich 15 befindlichen Objekten reflektierte Strahlungspulse werden von der Ablenkeinrichtung auf den Empfänger 17 gelenkt. Für jede Abtastrichtung 31 wird aus der Lichtlaufzeit mit Hilfe des bekannten Wertes für die Lichtgeschwindigkeit die Entfernung zu dem Objekt, an welchem die Strahlungspulse reflektiert wurden, berechnet. Für jeden mittels des Empfängers 17 nachgewiesenen Strahlungspuls sind die Richtung 31 (bezogen auf eine vorgegebene Bezugsrichtung), unter welcher der Strahlungspuls ausgesandt wurde, sowie die Objektentfernung bekannt, so dass aus den Einzelmessungen eines "Scans" in der betreffenden Abtastebene ein "Bild" der Umgebung erhalten wird. Die räumliche Auflösung dieses Bildes ist durch die Strahlungspulsfrequenz und die Drehgeschwindigkeit der Ablenkeinrichtung bestimmt. Es lassen sich z.B. ohne weiteres Auflösungen erreichen, die weniger als 1° betragen.

Da die rotierende Ablenkeinrichtung dem Sender 11 bzw. dessen Sendeoptik und dem Empfänger 17 bzw. dessen Empfangsoptik gemeinsam zugeordnet ist und somit der Sendekanal 13 und der Empfangskanal 19 gewissermaßen gemeinsam innerhalb der Abtastebene bewegt werden, bleibt die relative Anordnung von Sendekanal 13 und Empfangskanal 19 und damit deren Überlappung während des Scans unverändert erhalten.

Bei der Abschluss- oder Abdeckscheibe 25, die für die verwendete Strahlung der Erfassungseinrichtung durchlässig ist, kann es sich um einen Bestandteil der Erfassungseinrichtung selbst oder um einen Bestandteil der Umgebung handeln, in welche die Erfassungseinrichtung für die jeweilige Anwendung integriert wird. Hierauf kommt es für das Verständnis der Erfindung nicht an, da sich in beiden Fällen die Abschlussscheibe 25 während des maßgeblichen Betriebs der Erfassungseinrichtung in einer bezüglich der Positionen des Senders 11 und des Empfängers 17 definierten Lage befindet, in der die vorstehend erläuterte Rückstreuungssituation auftreten kann.

An dieser Stelle sei erwähnt, dass die Figur auch insofern schematisch zu verstehen ist, als in der Praxis die Abschlussscheibe 25 zumindest im Bereich der Abtastebene derart gekrümmt ausgebildet sein kann, dass für jeden Scan-Winkel, also für jede Abtastrichtung 31, die Abschlussscheibe 25 in der gleichen Entfernung zur Sender/Empfänger-Anordnung 11, 17 gelegen ist.

Zusätzlich zu dem Sender 11 und dem Empfänger 17 umfasst die erfindungsgemäße Erfassungseinrichtung einen Hilfssender 21, von dem in der Figur lediglich eine Hilfssendeoptik angedeutet ist und der beispielsweise einen so genannten Strichlaser umfasst. Der Hilfssender 21 ist innerhalb des Einbauraumes, der bei bestimmungsgemäß montierter Erfassungseinrichtung durch die Abschlussscheibe 25 von dem Überwachungsbereich 15 getrennt ist, und dabei in unmittelbarer Nähe zur Innenseite der Abschlussscheibe 25 angeordnet.

Ferner ist der Hilfssender 21 als starres, nicht-scannendes System ausgebildet. Die von dem Strichlaser ausgesandte Strahlung wird mittels der Hilfssendeoptik derart aufgeweitet, dass der hierdurch definierte Hilfssendekanal 23 den gesamten Abtastwinkelbereich des mit der rotierenden Ablenkeinrichtung versehenen Sender/Empfänger-Paares 11, 17 abdeckt. Die Sendeleistung des Hilfslasers 21 ist dabei derart ausgelegt, dass für den Nahbereich 15a eine ausreichende Ausleuchtung über den gesamten Abtastwinkelbereich des Scanners sichergestellt ist. Die Abdeckung des Abtastwinkelbereiches durch den Hilfssender 21 gewährleistet, dass sich der Hilfssendekanal 23 des Hilfssenders 21 und der Empfangskanal 19 des Empfängers 17 für jede Abtastrichtung 31, in welche der Scanner während seiner Abtastbewegung "blickt", innerhalb des Nahbereiches 15a einander zumindest teilweise überlappen. Sich innerhalb des Nahbereiches 15a befindende Objekte werden daher von der Erfassungseinrichtung "gesehen", da sie mittels des Hilfssenders 21 in ausreichendem Maße "beleuchtet" werden.

Die für diese Erhaltung der Messfähigkeit des Empfängers 17 im Nahbereich 15a erforderliche optische Trennung des Empfangskanals 19 von dem Sendekanal 23 des für die Ausleuchtung des Nahbereichs 15a sorgenden Hilfssenders 21 wird gemäß diesem Ausführungsbeispiel dadurch realisiert, dass sich der Hilfssender 21 in einem Schacht 29 befindet, der mit Ausnahme einer für die Strahlung durchlässigen oder offenen Seite von für die verwendete Strahlung undurchlässigen Wänden begrenzt ist.

Mit seiner offenen Seite ist der Schacht 29 auf die Innenseite der Abschlussscheibe 25 aufgesetzt. Der Hilfssender 21 befindet sich folglich innerhalb eines Raumes 27, der mit Ausnahme eines von der Abschlussscheibe 25 definierten, in den Überwachungsbereich 15 weisenden Strahlungsaustrittsfensters gegenüber der Umgebung und insbesondere gegenüber dem Inneren der Erfassungseinrichtung vollständig optisch isoliert ist. Von dem Hilfssender 21 ausgesandte und von der Innenseite der Abschlussscheibe 25 reflektierte Strahlung verbleibt somit innerhalb des Schachtes 29 und wird allenfalls in den Überwachungsbereich 15 zurück reflektiert, kann jedoch nicht auf den Empfänger 17 gelangen. Eine Störung des Empfängers 17 durch von der Abschlussscheibe 25 rückgestreute Strahlung ist somit ausgeschlossen. Eine Verschmutzung der Abschlussscheibe 25 kann daher die Messfähigkeit der erfindungsgemäßen Erfassungseinrichtung im Nahbereich 15a nicht beeinträchtigen.

Die Sendeleistung des Hilfssenders 21 ist derart auszulegen, dass auch im Falle einer Verschmutzung der Abschlussscheibe 25 eine ausreichende Strahlungsintensität innerhalb des Nahbereiches 15a sichergestellt ist.

Sobald ein Zustand erkannt wird, in dem während des Normalbetriebs bei inaktivem Hilfssender 21 die Rückstreuung 33 der von dem Sender 11 ausgesandten Strahlung von der Abschlussscheibe 25 ein vorgegebenes Maß übersteigt, wird der Sender 11 abgeschaltet und der Hilfssender 21 aktiviert.

Hinsichtlich weiterer möglicher Eigenschaften, Vorteile, Verwendungen und Anwendungen der erfindungsgemäßen Erfassungseinrichtung wird auch auf den Einleitungsteil verwiesen.

### Bezugszeichenliste

- 11: Sender, Sendeoptik
- 13: Sendekanal
- 15: Überwachungsbereich
- 15a: Nahbereich
- 17: Empfänger, Empfangsoptik
- 19: Empfangskanal
- 21: Hilfssender
- 23: Hilfssendekanal
- 25: Abschlussfläche, Abschlussscheibe
- 27: Raum
- 29: Wand, Schacht oder Gehäuse
- 31: Abtastrichtung
- 33: reflektierte Strahlung, Rückstreuung
- 35: Scan-Drehsinn

## Patentansprüche

1. Optoelektronische Erfassungseinrichtung, insbesondere Laserscanner, mit wenigstens einem Sender (11), der in einem Sendekanal (13) bevorzugt gepulste elektromagnetische Strahlung in einen Überwachungsbereich (15) aussendet, und zumindest einem dem Sender (11) zugeordneten Empfänger (17), der aus dem Überwachungsbereich (15) in einem Empfangskanal (19) reflektierte Strahlung nachweist,
wobei wenigstens ein Hilfssender (21) vorgesehen ist, der Strahlung in einem Hilfssendekanal (23) aussendet, welcher zumindest in einem Teilbereich des Nahbereichs (15a) des Überwachungsbereiches (15) den Empfangskanal (19) schneidet,
wobei der Sender (11), der Empfänger (17) und der Hilfssender (21) in vorgegebenen Positionen relativ zu einer gedachten oder realen Abschlussfläche (25) angeordnet sind, die einen den Sender (11), den Empfänger (17) und den Hilfssender (21) enthaltenden Einbauraum (27) von dem Überwachungsbereich (15) trennt, und
wobei der Hilfssender (21) gegenüber dem Empfänger (17) derart optisch isoliert ist, dass von dem Hilfssender (21) ausgesandte und von der Abschlussfläche (25) reflektierte Strahlung nicht auf den Empfänger (17) gelangt.

2. Erfassungseinrichtung nach Anspruch 1,
**dadurch gekennzeichnet,**
**dass** die Abschlussfläche von einer für die Strahlung durchlässigen Abschlussscheibe (25) gebildet ist.

3. Erfassungseinrichtung nach Anspruch 1 oder 2,
**dadurch gekennzeichnet,**
**dass** der Hilfssender (21) in unmittelbarer Nähe der Abschlussfläche (25) angeordnet ist.

4. Erfassungseinrichtung nach einem der vorhergehenden Ansprüche,
**dadurch gekennzeichnet,**
**dass** der Hilfssender (21) in einem Raum (27) angeordnet ist, der zum einen von der Abschlussfläche (25) und zum anderen von einer für die Strahlung undurchlässigen Wand (29) begrenzt ist.

5. Erfassungseinrichtung nach Anspruch 4,
**dadurch gekennzeichnet,**
**dass** der Raum (27) von einem für die Strahlung undurchlässigen Schacht oder Gehäuse (29) gebildet ist, der bzw. das mit einer für die Strahlung durchlässigen, insbesondere offenen, Seite der Abschlussfläche (25) zugewandt, insbesondere auf die Abschlussfläche (25) aufgesetzt, ist.

6. Erfassungseinrichtung nach einem der vorhergehenden Ansprüche,
**dadurch gekennzeichnet,**
**dass** die Erfassungseinrichtung als Scanner ausgebildet ist, der die Strahlung in wenigstens einer Abtastebene innerhalb eines Abtastwinkelbereiches nacheinander in unterschiedliche Abtastrichtungen (31) in den Überwachungsbereich (15) aussendet, wobei insbesondere eine relativ zu dem Sender (11) und dem Empfänger (17) rotierende Ablenkeinrichtung vorgesehen ist, welche für jede Abtastrichtung (31) die von dem Sender (11) ausgesandte Strahlung in den Überwachungsbereich (15) und die aus dem Überwachungsbereich (15) reflektierte Strahlung auf den Empfänger (17) lenkt.

7. Erfassungseinrichtung nach Anspruch 6,
**dadurch gekennzeichnet,**
**dass** der Hilfssender (21) derart ausgebildet ist, dass er den gesamten Abtastwinkelbereich abdeckt.

8. Erfassungseinrichtung nach einem der vorhergehenden Ansprüche,
**dadurch gekennzeichnet,**
**dass** der Hilfssender (21) als starres, in eine einzige Richtung sendendes System ausgebildet ist.

9. Erfassungseinrichtung nach einem der vorhergehenden Ansprüche,
**dadurch gekennzeichnet,**
**dass** der Hilfssender (21) als Strichlaser ausgebildet ist.

10. Erfassungseinrichtung nach einem der vorhergehenden Ansprüche,
**dadurch gekennzeichnet,**
**dass** der Hilfssender (21) derart ausgelegt ist, dass er in einem Entfernungen von bis zu 10m, insbesondere bis zu 5m, insbesondere bis zu 3m, umfassenden Nahbereich (15a) wirksam ist.

11. Erfassungseinrichtung nach einem der vorhergehenden Ansprüche,
**dadurch gekennzeichnet,**
**dass** eine Steuereinrichtung vorgesehen ist, die dazu ausgebildet ist, einen Zustand zu detektieren, in welchem die Rückstreuung (33) der von dem Sender (11) ausgesandten Strahlung von der Abschlussfläche (25) auf den Empfänger (17) ein vorgegebenes Maß übersteigt,
und bei Detektion eines derartigen Zustands den Hilfssender (21) zu aktivieren.

12. Verfahren zum Betreiben einer optoelektronischen Erfassungseinrichtung, insbesondere eines Laserscanner, die wenigstens einen Sender (11), der in einem Sendekanal (13) bevorzugt gepulste elektromagnetische Strahlung in einen Überwachungsbereich (15) aussendet, zumindest einen dem Sender (11) zugeordneten Empfänger (17), der aus dem Überwachungsbereich (15) in einem Empfangskanal (19) reflektierte Strahlung nachweist, und wenigstens einen Hilfssender (21) umfasst, der Strahlung in einem Hilfssendekanal (23) aussendet, welcher zumindest in einem Teilbereich des Nahbereichs (15a) des Überwachungsbereiches (15) den Empfangskanal (19) schneidet,
wobei der Sender (11), der Empfänger (17) und der Hilfssender (21) in vorgegebenen Positionen relativ zu einer für die Strahlung durchlässigen Abschlussscheibe (25) angeordnet werden, die einen den Sender (11), den Empfänger (17) und den Hilfssender (21) enthaltenden Einbauraum (27) von dem Überwachungsbereich (15) trennt,
wobei der Hilfssender (21) gegenüber dem Empfänger (17) derart optisch isoliert wird, dass von dem Hilfssender (21) ausgesandte und von der Abschlussscheibe (25) reflektierte Strahlung nicht auf den Empfänger (17) gelangt, und
wobei der Hilfssender (21) aktiviert wird, wenn die Rückstreuung (33) der von dem Sender (11) ausgesandten Strahlung von der Abschlussscheibe (25) auf den Empfänger (17) ein vorgegebenes Maß übersteigt.

13. Verfahren nach Anspruch 12,
**dadurch gekennzeichnet,**
**dass** der Sender (11) deaktiviert wird, wenn der Hilfssender (21) aktiviert wird.

14. Verfahren nach Anspruch 12 oder 13,
**dadurch gekennzeichnet,**
**dass** die Erfassungseinrichtung als Scanner betrieben wird und der Sender (11) die Strahlung innerhalb eines Abtastwinkelbereiches in wenigstens einer Abtastebene nacheinander in unterschiedliche Abtastrichtungen (31) in den Überwachungsbereich (15) aussendet.

15. Verfahren nach einem der Ansprüche 12 bis 14,
**dadurch gekennzeichnet,**
**dass** mittels einer relativ zu dem Sender (11) und dem Empfänger (17) rotierenden Ablenkeinrichtung für jede Abtastrichtung (31) die von dem Sender (11) ausgesandte Strahlung in den Überwachungsbereich (15) und die aus dem Überwachungsbereich (15) reflektierte Strahlung auf den Empfänger (17) gelenkt wird.

16. Verfahren nach Anspruch 15,
**dadurch gekennzeichnet,**
**dass** der Hilfssender (21) derart betrieben wird, dass er den gesamten Abtastwinkelbereich abdeckt.
